# EUROPEAN PATENT SPECIFICATION

(11) **EP 1 835 780 B1**
(45) Date of publication and mention of the grant of the patent: **09.10.2019**
(21) Application number: 07005441.6
(22) Date of filing: 16.03.2007
(51) Int. Cl.: H04W 36/22, H04W 48/12

(54) **LOAD SHARING IN MOBILE RADIO ACCESS NETWORKS USING MODIFIED PARAMETERS FOR CELL RESELECTION BY DEDICATED SIGNALLING**
LASTTEILUNG IN MOBILEN FUNKZUGANGSNETZEN UNTER VERWENDUNG VON MODIFIZIERTEN PARAMETERN FÜR DIE ZELLENNEUAUSWAHL DURCH DEZIDIERTE SIGNALISIERUNG
PARTAGE DE CHARGE DANS DES RÉSEAUX D'ACCÈS RADIO MOBILES EN UTILISANT LES PARAMÈTRES MODIFIÉS POUR LA RESÉLECTION DE CELLULE PAR LE SIGNAL DÉDIÉ

(30) Priority: 17.03.2006 EP 06005459
(43) Date of publication of application: 19.09.2007
(73) Proprietor: T-Mobile International AG, 53227 Bonn (DE); Deutsche Telekom (UK) Limited, London Hertfordshire AL10 9BW (GB)
(72) Inventor: Klatt, Axel, 50996 Köln (DE); Stevens, Peter, St. Albans AL1 1PF (GB)
(74) Representative: Riebling, Peter

(56) References cited:
- WO-A1-2004/040935
- WO-A2-00/42779
- GB-A- 2 397 469
- "3rd Generation Partnership Project; Technical Specification Group GSM/EDGE Radio Access Network; Radio subsystem link control (Release 7)", 3GPP STANDARD; 3GPP TS 45.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.2.0, 1 January 2006 (2006-01-01), pages 1-111, XP050379194,

## Description

The invention generally relates to mobile communications and in particular to mobile radio access networks and mobility management between different radio access technologies.

In today's wireless radio systems like GSM/GPRS or UMTS mobile radio networks, typically UE-(user equipment) controlled cell reselection algorithms currently operate independently of any subscriber-specific or service considerations. All user equipments (user terminals) are handled in the same way based on parameter broadcast on a broadcast channel (BCCH), and hence follow the same cell reselection strategies.

In the case that any service or subscriber differentiation is required, e.g. for traffic steering between GERAN (GSM/EDGE Radio Access System) and UTRAN (UMTS Terrestrial Radio Access Network), this is typically performed once the UE has entered the CELL_DCH RRC state in which the network controls mobility. The CELL_DCH state is characterised by a dedicated physical channel allocated to the UE in uplink and downlink, the UE is known on cell level according to its current active set and dedicated transport channels, downlink and uplink (TDD) shared transport channels, a combination of these transport channels can be used by the UE. The details for a UMTS system are defined by the 3^{rd} Generation Partnership Project in different technical specifications available via [www.3gpp.org]. For GSM/GPRS the signalling and the algorithms are defined in [3GPP TS 45.008 and TS 44.018], for UMTS systems mainly in [3GPP TS 25.304 and TS 25.331].

In the case of mixed GERAN-UTRAN networks, this has resulted in the following typical implementations in current networks:
- Users and their UE are typically camped upon the UTRAN networks in order to provide fast access to the faster UTRAN data services
- If it necessary to steer traffic to an alternative network, this is done during or soon after the call set-up using network controlled handover/cell change order functions ("directed retry")
- When the service flow ends and the user is returned to a state utilising UE-controlled cell reselection, the UTRAN network will be reselected. Depending upon the implementation of recent change requests, and the use of DTM (Dual Transfer Mode), location updates may need to be performed, leading to paging outage. The Dual Transfer Mode allows the simultaneous use of speech and packet-data connections.
- Load sharing is done for voice. Data traffic is typically kept on UTRAN.

The implementation described above works sufficiently well for the UTRAN-GERAN case when the steered traffic is voice, as the user is unlikely to notice which networks is serving him. Data services will typically be handled on the 3^{rd} Generation networks, because of the sizeable performance differential between UMTS/HSDPA and GPRS.

This does not prevent application of the proposed method also for UMTS or other radio access systems.

Currently, the next generation of mobile networks is under development in 3GPP. The next generation of 3GPP radio access systems is currently called "Long Term Evolution" (LTE) and the next generation of core networks called "system architecture evolution" (SAE).

Details can be found [http://www.3gpp.org/Highlights/LTE/LTE.htm]

GB 2 397 469 A relates to a system for cell biasing for idle mode subscriber units in a cellular communication system. A base station comprises a load processor for locally determining load information for a cell in response to load related operating conditions of the cell. The load information maybe a congestion level of the cell. The load processor is coupled to a bias processor that determines a bias parameter for the cell in response to the load information. The bias parameter may be a signal strength offset value to be applied the signal strength measurements for that cell. The base station further comprises a transmitter for broadcasting the bias parameter. An idle mode subscriber unit measures the signal strength of the surrounding base stations and compensates the measurements by the bias parameter. It then selects the cell having the highest modified signal strength as a serving cell.

The same bias parameter broadcasted in the cell has to be used by all subscriber units located in that cell. Another example can be found in document "3rd Generation Partnership Project; Technical Specification Group GSM/EDGE Radio Access Network; Radio subsystem link control (Release 7)",3GPP STANDARD; 3GPP TS 45.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.2.0, 1 January 2006 (2006-01-01), pages 1-111, XP050379194".

It is the object of the present invention to enable existing and future radio access systems to distribute user terminals between different radio access technologies in a flexible and individual manner.

This object is achieved by providing a method and a system as described in the claims.

One very likely deployment scenario for an E-UTRAN (Evolved UTRAN) is as a capacity overlay to the existing UTRAN network. In this scenario load sharing of data traffic between UTRAN and E-UTRAN networks will be an important function.

Many UMTS networks have been deployed in support of high speed data services, unlike GERAN which was typically deployed for voice services. It is therefore important that UTRAN remains utilised by data services as the LTE (Long Term Evolution) handset penetration rises. Furthermore, the performance differential between E-UTRAN and UTRAN will be smaller than between GERAN and UTRAN. For these reasons an efficient low latency means of doing PS data load sharing is required between E-UTRAN and UTRAN.

When steering data services it is no longer considered adequate to rely upon network-controlled active state mobility mechanisms, since this will add network switching delay when the user wants to send data, enters the active state and is ordered to a different RAT (radio access technology).

It is proposed to apply a method which allows the network to selectively signal parameters which influence the cell reselection process of certain mobiles in order to selectively steer mobiles between different radio access technologies (e.g. from LTE to UMTS, GERAN or WLAN or any other technology), while the cell reselection of all other mobile are not effected.
Figure 1 shows an example of a signalling parameter set to be applied to the mobile terminal.
Figure 2 shows how to differentiate and control mobile terminal cell reselection per by different parameter sets.
Figure 3a shows an application of mobile terminal specific QoffsetX on cell a selection criteria (UMTS example).
Figure 3b shows an application of mobile terminal specific QoffsetX on cell reselection criteria (UMTS example).

This section describes one possible implementation of the invention meeting the requirements, assuming E-UTRAN reuses existing reselection algorithms.

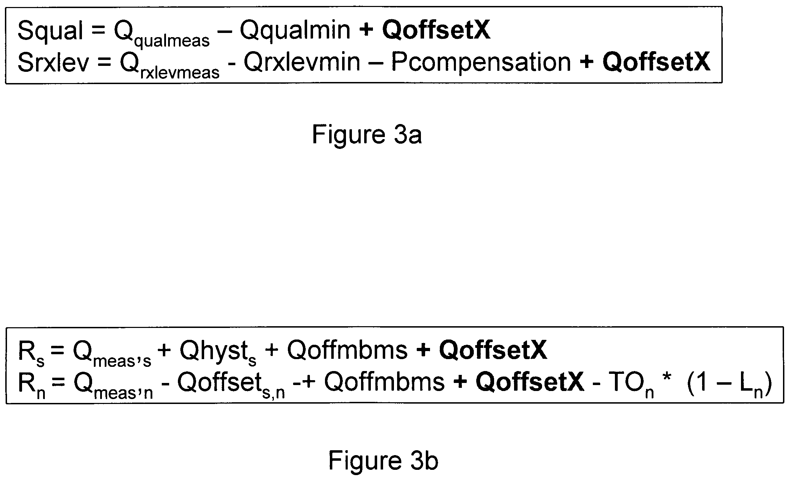

In UTRAN, the Qoffset_{s,n} parameter (see figure 3b) is used to bias reselection between a given pair of cells, as described in [3GPP TS 25.304]. This parameter is broadcast to the UE within SIB 3 and 4 messages (302).

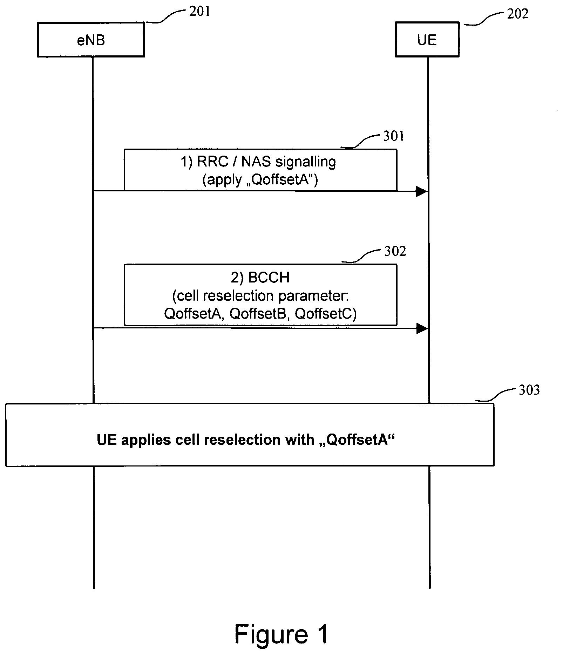

As shown in Figure 1, in order for the network to do UE-specific RAT selection, it is proposed that an additive UE-specific inter-RAT offset parameter may be provided to the UE using dedicated RRC signalling (301) or by any other means (e.g. on BCCH, but only valid for a specific part of the mobile population within that cell, usage of CN NAS signalling - e.g. during Tracking Area Update procedure, etc.) (302). The UE applies cell reselection with the signaled offset parameter, here: QoffsetA (303).

This offset parameter would then be added by the UE (202) to the broadcast Qoffset_{s,n} values for specific cell relations (see figures 3a and 3b). The Inter-RAT offset would apply for the duration of a configurable timer to all Inter-RAT relationships between the same RATs, and would also be applied while the UE is camped on the other RAT in order that ping-pong is avoided between the RATs. Alternatively the signalled additional offset should be applied by the UE until a new UE specific inter-RAT offset is received of it is deleted by specific signalling.

The offset parameter allows a radio access network (201) to selectively influence the UE based cell reselection process of certain mobile in a mobile system (301, 302) in order to allow steering terminals based on cell reselection between radio access technologies or frequencies.

The controlling instance of a mobile network, e.g. an RNC in UMTS or an enhanced NodeB (or any other radio or CN node) in LTE (201), signals a specific offset in a dedicated signalling message (301) towards a UE (202) which in turn applies this offset as an additional offset on the general configured cell reselection parameters (figure 3b).

The controlling instance of a mobile network, e.g. an RNC in UMTS or an enhanced NodeB (or any other radio or CN node) in LTE, also can include a timer value in the message or any other message which is signalled to the UE. The timer value determines for how long the received additional offset shall be applied by the UE for the cell reselection algorithm also on another radio access system.

Further, the controlling instance of a mobile network, e.g. an RNC in UMTS or an enhanced NodeB (or any other radio or CN node) in LTE, can signal on a broadcast channel, e.g. BCCH, a specific offset value which should be used by a group of UEs for the cell reselection process (301, 302).

Also, the controlling instance of a mobile network, e.g. an RNC in UMTS or an enhanced NodeB (or any other radio or CN node) in LTE, can signal on a broadcast channel, e.g. BCCH, by any means that this offset value shall be applied by a specific group of terminals (301, 302).

The controlling instance of a mobile network, e.g. an RNC in UMTS or an enhanced NodeB (or any other radio or CN node) in LTE, can also signal on a broadcast channel, e.g. BCCH, by any means that this offset value shall be applied by a specific group of mobile terminals, and this group of mobiles is identified by a part of their IMSI. For example, the BCCH of a PLMN with the network code 262-01, e.g. T-Mobile D in Germany, signals that ONLY the UE(s) with an IMSI from a given Home PLMN (e.g. 262-99, different to the VPLMN) shall apply this offset. This is especially useful in case of national roaming between different operators and the UEs roaming in the VPLMN should preferably apply the reselection back to the HPLMN.

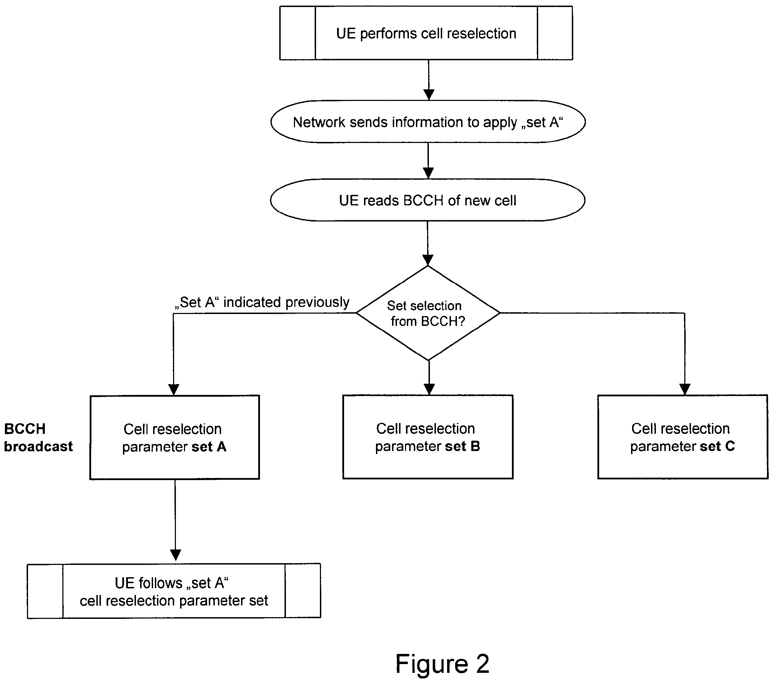

An alternative implementation of the invention can be realized by partitioning the system information broadcast parameters in a way that allows to transmit multiple instances of the "cell reselection parameters" (also including neighbour lists) and indicate that a given set shall be applied by specific UEs (see figure 2). In this way the UE gets an indication which set of parameters should be used by the mobile during cell reselection evaluation. For example "set A" could prioritise the camping on LTE, while "set B" pushes the mobile to camp on UMTS and "set C" pushes the mobile to camp on GERAN for instance. In this way, a UE can be assigned to a given set of parameters based on the intended "camping policy". The decision on which set of parameters has to be applied by the mobile might be decided on subscription based or other operator controlled decisions. One example could be a specific subscription to voice services which preferably foresees multi-RAT mobiles camping on GERAN part of network, while terminals with a high speed data subscription are preferably camped on LTE. Another decision criteria could be the subscription status (e.g. Gold, Silver, Bronze subscription for data). In this case terminals with Bronze data subscription might be preferably moved to HSxPA in case the LTE system load exceeds a defined threshold.

### List of Abbreviations

- 3GPP: 3rd Generation Partnership Project [www.3gpp.org]
- UE: User Equipment (Mobile Terminal)
- GSM: Global System for Mobile Communication
- GPRS: General Packet Radio Service
- UMTS: Universal Mobile Telecommunication System
- BCCH: Broadcast Control Channel
- GERAN: GSM/EDGE Radio Access System
- EDGE: Enhanced Data for GERAN Evolution
- DCH: Dedicated Channel
- RRC: Radio Resource Control
- DTM: Dual Transfer Mode
- HSDPA: High Speed Downlink Packet Access
- LTE: 3GPP Long Term Evolution
- PS: Packet Switched Domain
- RAT: Radio Access Technology
- SIB: System Information Block
- SAE: 3GPP System Architecture Evolution
- RRC: Radio Resource Control
- RNC: Radio Network Controller
- NodeB: Base Transceiver Station (UMTS)
- PLMN: Public Land Mobile Network
- HPLMN: Home PLMN
- VPLMN: Visited PLMN
- UTRAN: UMTS Terrestrial Radio Access Network
- E-UTRAN: Evolved UTRAN
- IMSI: International Mobile Subscriber Identity

## Claims

1. A method in a mobile radio network for signalling to mobile terminals (202) signal parameters which influence the cell reselection process of the mobile terminals (202) between different radio access technologies and frequencies, **characterized in that** the parameters are signalled selectively to certain mobile terminals (202) in order to selectively steer these mobile terminals (202) between the different radio access technologies and frequencies, while the cell reselection of all other mobile terminals (202) are not affected, wherein system information broadcast parameters are partitioned in a way that allows to transmit multiple instances of cell reselection parameters forming multiple sets of parameters (A, B, C) to the mobile terminals, wherein a specific mobile terminal gets an indication which one of the multiple sets of parameters (A, B, C) should be used by the mobile terminal (202) during cell reselection evaluation.

2. A method according to claim 1, wherein the parameters include an offset value signalled to the mobile terminals (202) which is applied on the regular cell reselection parameters in order to selectively change the cell reselection behaviour of the mobile terminals (202).

3. A method according to claim 2, wherein a controlling instance (201) of the mobile radio network signals a specific offset in a dedicated signalling message (301) towards a mobile terminal (202) which in turn applies this offset as additional offset on the general configured cell reselection parameters.

4. A method according to claim 3, wherein the signalling message (301) utilises Radio Resource Control, RRC, or Non-Access Stratum, NAS, signalling.

5. A method according to claim 2 or 3, wherein a controlling instance (201) of the mobile radio network adds a timer value in the message or any other message which signals to the mobile terminal (202) how long the received additional offset shall be applied by the mobile terminal for the cell reselection algorithm also on another radio access system.

6. A method according to claim 2, wherein a controlling instance (201) of the mobile radio network signals on a broadcast channel (302) a specific offset which should be used by a group of mobile terminals (202) for the cell reselection process.

7. A method according to claim 2, wherein a controlling instance (201) of the mobile radio network signals on a broadcast channel (302) by any means that this offset shall be applied by a specific group of terminals.

8. A method according to claims 6 or 7, wherein the broadcast channel (302) is a Broadcast Control Channel, BCCH,

9. A method according to claims 3-8, wherein the controlling instance (201) comprises a Radio Network Controller in a UMTS network or an enhanced NodeB, or any other radio or CN node.

10. A mobile radio system comprising means for signalling to mobile terminals (202) signal parameters which influence the cell reselection process of the mobile terminals (202) between different radio access technologies and frequencies, **characterized in that** the means is configured to selectively signal the parameters to certain mobile terminals (202) in order to selectively steer
these mobile terminals (292) between the different radio access technologies and frequencies, while the cell reselection of all other mobile terminals (202) are not affected, wherein system information broadcast parameters are partitioned in a way that allows to transmit multiple instances of cell reselection parameters forming multiple sets of parameters (A, B, C) to the mobile terminals, and wherein a specific mobile terminal (202) gets an indication which one of the multiple sets of parameters (A, B, C) should be used by the mobile terminal (202) during cell reselection evaluation.

11. Data processing software program comprising a program code which performs a method according to claim 1 when it is executed on a data processing system.

12. Data processing program product comprising a program code which is executable on a data processing system for performing a method according to claim 1.

13. A mobile terminal (202) configured to be operated in connection with a method according to any of claims 1-9.

## Patentansprüche

1. Verfahren in einem mobilen Funknetz zum an mobile Endgeräte (202) gerichteten Signalisieren von Signalparametern, die den Zellenneuauswahl-Prozess der mobilen Endgeräte (202) zwischen verschiedenen Funkzugangs-Techniken und -Frequenzen beeinflussen, **dadurch gekennzeichnet, dass** die Parameter selektiv an bestimmte mobile Endgeräte (202) signalisiert werden, um diese mobilen Endgeräte (202) selektiv zwischen den verschiedenen Funkzugangs-Techniken und -Frequenzen zu lenken, während die Zellenneuauswahl aller anderer mobiler Endgeräte (202) nicht beeinträchtigt wird, wobei rundgesendete System-Informations-Parameter in einer Weise aufgeteilt werden, die es ermöglicht, mehrfache Instanzen von Zellenneuauswahl-Parametern, die vielfache Sätze von Parametern (A, B, C) bilden, an mobile Endgeräte zu übertragen, wobei ein spezifisches mobiles Endgerät eine Angabe darüber erhält, welcher der vielfachen Sätze von Parametern (A, B, C) während der Zellenneuauswahl-Auswertung von dem mobilen Endgerät (202) verwendet werden sollte.

2. Verfahren gemäß Anspruch 1, wobei die Parameter einen an die mobilen Endgeräte (202) signalisierten Offset-Wert beinhalten, der auf reguläre Zellenneuauswahl-Parameter angewendet wird, um das Zellenneuauswahl-Verhalten der mobilen Endgeräte (202) selektiv zu ändern.

3. Verfahren gemäß Anspruch 2, wobei eine Kontrollinstanz (201) des mobilen Funknetzes einen spezifischen Offset in einer dedizierten Signalisierungsnachricht (301) in Richtung auf ein mobiles Endgerät (202) signalisiert, das seinerseits diesen Offset als einen zusätzlichen Offset auf die allgemeinen konfigurierten Zellenneuauswahl-Parameter anwendet.

4. Verfahren gemäß Anspruch 3, wobei die Signalisierungsnachricht (301) eine Signalisierung über Funk-Ressourcen-Steuerung (Radio Resource Control), RRC, oder Non-Access Stratum, NAS, verwendet.

5. Verfahren gemäß Anspruch 2 oder 3, wobei eine Kontrollinstanz (201) des mobilen Funknetzes einen Timer-Wert in der Nachricht oder einer beliebigen anderen Nachricht hinzufügt, die dem mobilen Endgerät (202) signalisiert, wie lange der empfangene zusätzliche Offset von dem mobilen Endgerät auch auf einem anderen Funkzugangssystem für den Zellenneuauswahl-Algorithmus angewendet werden soll.

6. Verfahren gemäß Anspruch 2, wobei eine Kontrollinstanz (201) des mobilen Funknetzes auf einem Rundsendekanal (302) einen spezifischen Offset signalisiert, der von einer Gruppe mobiler Endgeräte (202) für den Zellenneuauswahl-Prozess verwendet werden sollte.

7. Verfahren gemäß Anspruch 2, wobei eine Kontrollinstanz (201) des mobilen Funknetzes auf einem Rundsendekanal (302) durch beliebige Mittel signalisiert, dass dieser Offset von einer spezifischen Gruppe von Endgeräten verwendet werden soll.

8. Verfahren gemäß Anspruch 6 oder 7, wobei der Rundsende-Kanal (302) ein Rundsende-Steuerungskanal (Broadcast Control Channel), BCCH, ist.

9. Verfahren gemäß einem der Ansprüche 3 bis 8, wobei die Kontrollinstanz (201) einen Radio Network Controller in einem UMTS-Netzwerk oder einen Enhanced Node B oder einen beliebigen anderen Funk- oder CN-Node umfasst.

10. Mobiles Funksystem, umfassend Mittel zum an mobile Endgeräte (202) gerichteten Signalisieren von Signalparametern, die den Zellenneuauswahl-Prozess der mobilen Endgeräte (202) zwischen verschiedenen Funkzugangs-Techniken und -Frequenzen beeinflussen, **dadurch gekennzeichnet, dass** die Mittel dazu konfiguriert sind, die Parameter selektiv an bestimmte mobile Endgeräte (202) zu signalisieren, um diese mobilen Endgeräte (202) selektiv zwischen den verschiedenen Funkzugangs-Techniken und -Frequenzen zu lenken, während die Zellenneuauswahl aller anderer mobiler Endgeräte (202) nicht beeinträchtigt wird, wobei rundgesendete System-Informations-Parameter in einer Weise aufgeteilt werden, die es ermöglicht, mehrfache Instanzen von Zellenneuauswahl-Parametern, die vielfache Sätze von Parametern (A, B, C) bilden, an mobile Endgeräte zu übertragen, wobei ein spezifisches mobiles Endgerät eine Angabe darüber erhält, welcher der vielfachen Sätze von Parametern (A, B, C) während der Zellenneuauswahl-Auswertung von dem mobilen Endgerät (202) verwendet werden sollte.

11. Datenverarbeitungs-Softwareprogramm, umfassend einen Programmcode, der ein Verfahren gemäß Anspruch 1 durchführt, wenn er auf einem Datenverarbeitungssystem ausgeführt wird.

12. Datenverarbeitungs-Programmprodukt, umfassend einen Programmcode, der auf einem Datenverarbeitungssystem ausführbar ist, um ein Verfahren gemäß Anspruch 1 durchzuführen.

13. Mobiles Endgerät (202), das dazu konfiguriert ist, im Zusammenhang mit einem Verfahren gemäß einem der Ansprüche 1 bis 9 betrieben zu werden.

## Revendications

1. Procédé dans un réseau radio mobile pour signaler à des terminaux mobiles (202) des paramètres de signaux qui influencent le processus de resélection de cellule pour les terminaux mobiles (202) entre différentes technologies d'accès radio et fréquences, **caractérisé en ce que** les paramètres sont signalés sélectivement à certains terminaux mobiles (202) afin d'orienter sélectivement ces terminaux mobiles (202) entre les différentes technologies d'accès radio et fréquences, tandis que la resélection de cellule de tous les autres terminaux mobiles (202) n'est pas affectée, dans lequel des paramètres de diffusion d'informations de systèmes sont partitionnés d'une manière qui permet de transmettre plusieurs instances de paramètres de resélection de cellule formant plusieurs ensembles de paramètres (A, B, C) aux terminaux mobiles, dans lequel un terminal mobile spécifique obtient une indication sur celui, parmi les ensembles de paramètres (A, B, C), qui devrait être utilisé par le terminal mobile (202) pendant l'évaluation de resélection de cellule.

2. Procédé selon la revendication 1, dans lequel les paramètres incluent une valeur de décalage, signalée aux terminaux mobiles (202), qui est appliquée sur les paramètres de resélection de cellule normaux afin de changer sélectivement le comportement de resélection de cellule des terminaux mobiles (202).

3. Procédé selon la revendication 2, dans lequel une instance de contrôle (201) du réseau radio mobile signale un décalage spécifique dans un message de signalisation dédié (301) vers un terminal mobile (202) qui applique à son tour ce décalage comme décalage supplémentaire sur les paramètres de resélection de cellule configurés généraux.

4. Procédé selon la revendication 3, dans lequel le message de signalisation (301) utilise une signalisation par contrôle de ressource radio, RRC, ou strate de non accès, NAS.

5. Procédé selon la revendication 2 ou 3, dans lequel une instance de contrôle (201) du réseau de radio mobile ajoute une valeur de temporisateur dans le message ou tout autre message qui signale au terminal mobile (202) pendant combien de temps le décalage supplémentaire reçu devra être appliqué par le terminal mobile pour l'algorithme de resélection de cellule également sur un autre système d'accès radio.

6. Procédé selon la revendication 2, dans lequel une instance de contrôle (201) du réseau radio mobile signale sur un canal de diffusion (302) un décalage spécifique qui devrait être utilisé par un groupe de terminaux mobiles (202) pour le processus de resélection de cellule.

7. Procédé selon la revendication 2, dans lequel une instance de contrôle (201) du réseau radio mobile signale sur un canal de diffusion (302) par n'importe quel moyen que ce décalage devra être appliqué par un groupe spécifique de terminaux.

8. Procédé selon les revendications 6 ou 7, dans lequel le canal de diffusion (302) est un canal de contrôle de diffusion, BCCH.

9. Procédé selon les revendications 3 à 8, dans lequel l'instance de contrôle (201) comprend un contrôleur de réseau radio dans un réseau UMTS ou un Node B amélioré, ou tout autre noeud radio ou CN.

10. Système radio mobile comprenant des moyens pour signaler à des terminaux mobiles (202) des paramètres de signaux qui influencent le processus de resélection de cellule pour les terminaux mobiles (292) entre différentes technologies d'accès radio et fréquences, **caractérisé en ce que** les moyens sont configurés pour signaler sélectivement les paramètres à certains terminaux mobiles (202) afin d'orienter sélectivement ces terminaux mobiles (202) entre les différentes technologies d'accès radio et fréquences, tandis que la resélection de cellule de tous les autres terminaux mobiles (202) n'est pas affectée, dans lequel des paramètres de diffusion d'informations de systèmes sont partitionnés d'une manière qui permet de transmettre plusieurs instances de paramètres de resélection de cellule formant plusieurs ensembles de paramètres (A, B, C) aux terminaux mobiles, dans lequel un terminal mobile (202) spécifique obtient une indication sur celui, parmi les ensembles de paramètres (A, B, C), qui devrait être utilisé par le terminal mobile (202) pendant l'évaluation de resélection de cellule.

11. Programme logiciel de traitement de données comprenant un code de programme qui réalise un procédé selon la revendication 1, quand il est exécuté sur un système de traitement de données.

12. Produit de programme de traitement de données comprenant un code de programme qui est exécutable sur un système de traitement de données pour réaliser un procédé selon la revendication 1.

13. Terminal mobile (202) configuré pour fonctionner en liaison avec un procédé selon l'une quelconque des revendications 1 à 9.
